Europäisches Patentamt

European Patent Office

Office européen des brevets

(19)

(11) **EP 0 816 896 B1**

(12) **FASCICULE DE BREVET EUROPEEN**

(45) Date de publication et mention
de la délivrance du brevet:
**25.08.2004   Bulletin 2004/35**

(51) Int Cl.⁷: $G02F\ 1/01$, G02F 1/035,
G02B 6/125

(21) Numéro de dépôt: **97401380.7**

(22) Date de dépôt: **17.06.1997**

(54) **Composant électrooptique**

Optisches Bauelement

Optical component

(84) Etats contractants désignés:
**DE FR GB**

(30) Priorité:  **18.06.1996  FR 9607528**

(43) Date de publication de la demande:
**07.01.1998   Bulletin 1998/02**

(73) Titulaire: **FRANCE TELECOM**
**75015 Paris (FR)**

(72) Inventeur: **Toussaere, Eric**
**92320 Chatillon (FR)**

(74) Mandataire: **Martin, Jean-Jacques et al**
**Cabinet Régimbeau**
**20, rue de Chazelles**
**75847 Paris Cedex 17 (FR)**

(56) Documents cités:
**EP-A- 0 752 607**          **FR-A- 2 496 344**
**GB-A- 2 095 419**          **US-A- 3 589 794**

• AHMED M J ET AL: "Integrated optic series and
multibranch interferometers" JOURNAL OF
LIGHTWAVE TECHNOLOGY, FEB. 1985, USA,
vol. LT-3, no. 1, ISSN 0733-8724, pages 77-82,
XP002039674
• ISHIKAWA T: "Polarisation-independent
LiNbO/sub 3/ waveguide optical modulator for
bidirectional transmission" ELECTRONICS
LETTERS, 12 MARCH 1992, UK, vol. 28, no. 6,
ISSN 0013-5194, pages 566-567, XP000287241
• LIANG J ET AL: "Design and fabrication of
electro-optic polymer waveguides" TOPICAL
MEETING ON ORGANIC THN FILMS FOR
PHOTONIC APPLICATIONS, PAPER WD13-1,
1993, pages 99-102, XP000604496
• LIANG J ET AL: "Thermally stable cross-linked
polymers for electro-optic applications"
JOURNAL DE PHYSIQUE III, DEC. 1994,
FRANCE, vol. 4, no. 12, ISSN 1155-4320, pages
2441-2450, XP000491704
• BUACHIDZE Z.E. ET AL: 'Waveguide
electrooptic modulator with a limiting
modulation frequency higher than 10 GHz' SOV.
J. QUANTUM ELECTRON. vol. 18, no. 7, 1988,
NEW YORK, NY, US, pages 898 - 899

EP 0 816 896 B1

## Description

La présente invention est relative aux composants électrooptiques.

Les polymères électrooptiques ont un fort potentiel dans le domaine des télécommunications. On envisage de les employer dans des réseaux de distribution optiques chez l'abonné (fiber to the home : FTTH, selon la terminologie anglo-saxonne généralement utilisée par l'Homme du Métier) car ils sont susceptibles de permettre la fabrication de composants à bas coût. Ils permettent de réaliser simplement des guides d'onde sur des substrats variés. Lorsque le polymère orienté est placé entre des électrodes, l'application d'un champ électrique de modulation entre les électrodes permet de moduler l'indice de réfraction du polymère via l'effet Pockels. Cela se traduit par un déphasage de l'onde optique guidée ; ce déphasage peut être utilisé pour traiter le signal optique (modulation, commutation, etc).

Un but de l'invention est de proposer des perfectionnements aux composants électrooptiques connus à ce jour.

Pour l'effet électrooptique, on distingue trois types de géométrie d'électrodes : les géométries à électrodes planes, celles à électrodes transverses et celles à électrodes coplanaires.

Pour les géométries à électrodes planes, on forme un condensateur plan, le polymère électrooptique étant placé entre les électrodes.

On connaît depuis longtemps des technologies permettant la réalisation de guides d'ondes à courbure.

On pourra à cet égard par exemple se référer à la publication :

"Bends in Optical Dielectric Guides", E.A. J. MARCATILI, The Bell system technical journal, September 1969, pp; 2102-2133.

et plus récemment, à

"Design and fabrication of electro-optic polymer waveguides", J. Liang, R. Levenson, J. Zyss, ACS/OSA 93 (Toronto) - Topical Meeting - Organic Thin Films for Photonic Applications,

Toutefois, les guides optiques des composants électrooptiques connus à ce jour sont généralement quasiment rectilignes.

Les composants électrooptiques sont en effet habituellement fabriqués à base de cristaux ferroélectriques ou de semi-conducteurs.

Or, dans de tels matériaux, le guide d'ondes est généralement réalisé par perturbation locale de l'indice de réfraction. Les différences d'indice entre le coeur et la gaine des guides étant faible (0,001), les guides optiques de ces composants doivent présenter des géométries sensiblement linéaires afin de minimiser les pertes de courbure (angle inférieur à 0,1°).

On notera en outre que les efforts de recherche sur ces composants portent principalement, à l'heure actuelle, sur l'optimisation des matériaux actifs, et notamment l'amélioration de leurs coefficients électrooptiques.

L'invention propose un composant comportant un guide optique dont le coeur est en un matériau électrooptique, ainsi qu'au moins une métallisation au droit d'une portion dudit guide, pour la commande de celui-ci, caractérisé en ce que le guide optique est replié et en ce que la métallisation s'étend au droit d'au moins deux portions du guide optique qui s'étendent de façon repliée l'une par rapport à l'autre.

Le matériau électrooptique est avantageusement un matériau polymère.

Notamment, une telle structure trouve avantageusement application dans le cas de composants capacitifs, c'est-à-dire commandés à des fréquences inférieures ou de l'ordre du GHz, puisqu'elle permet d'en réduire la taille ou la tension de commande. On a alors un compromis tension de commande-bande passante-encombrement à optimiser.

Elle trouve également avantageusement application dans les composants à ondes progressives. La métallisation est alors utilisée comme ligne de transmission hyperfréquence et le signal optique se propage dans les portions de guide au droit desquelles la métallisation s'étend, dans la même direction et le même sens que le signal hyperfréquence qui se propage dans cette métallisation.

Un tel composant présente en effet une longueur de la ligne hyperfréquence réduite, ce qui limite l'atténuation de l'onde hyperfréquence, et réduit la taille du composant.

Par ailleurs, le guide optique du composant comporte avantageusement un convertisseur de polarisation disposé entre deux portions au droit desquelles s'étend la métallisation de commande.

Une telle structure permet de moduler successivement avec une même métallisation les deux polarisations de propagation dans le guide optique ; la bande passante est réduite, mais on obtient un composant plus simple à utiliser, surtout pour la modulation hyperfréquence.

Le composant proposé par l'invention peut être intégré monolithiquement dans tout composant optique, notamment dans un composant de Mach-Zehnder, un commutateur optique (modulateur à insertion extraction par exemple) ou tout autre composant actif utilisant l'effet électrooptique sur une portion de guide linéaire.

D'autres caractéristiques et avantages de l'invention ressortiront encore de la description qui suit. Cette description est purement illustrative et non limitative. Elle doit être lue en regard des dessins annexés sur lesquels :

- la figure 1 est une représentation schématique d'un modulateur de phase insensible à la polarisation ;
- les figures 2 à 5 sont des représentations schématiques de modulateurs d'intensité insensibles à la polarisation ;
- la figure 6 est une représentation schématique d'un coupleur 2x2 insensible à la polarisation ;
- les figures 7a, 7b sont des graphes sur lesquels on a porté les amplitudes des modes en fonction de la tension de modulation appliquée aux modulateurs élémentaires du montage de la figure 1 ;
- les figures 8a, 8b sont des graphes sur lesquels on a porté les intensités des modes en fonction de la tension de modulation appliquée aux modulateurs élémentaires du montage de la figure 1 ;
- la figure 9 est un graphe sur lequel on a porté l'intensité totale en sortie du modulateur de la figure 2 pour différents angles de polarisation d'entrée, en fonction la tension de modulation ;
- les figures 10a, 10b et 11 sont des graphes analogues à ceux des figures 8a, 8b et 9, pour le modulateur de la figure 3 ;
- les figures 12a, 12b et 13 sont des graphes analogues à ceux des figures 8a, 8b et 9, pour le modulateur de la figure 4 ;
- les figures 14a, 14b et 15 sont des graphes analogues à ceux des figures 8a, 8b et 9, pour le modulateur de la figure 5 ;
- la figure 16 illustre un modulateur conforme à un art antérieur connu ;
- les figures 17 à 22 illustrent des modulateurs conformes à différents modes de réalisation possibles pour l'invention.

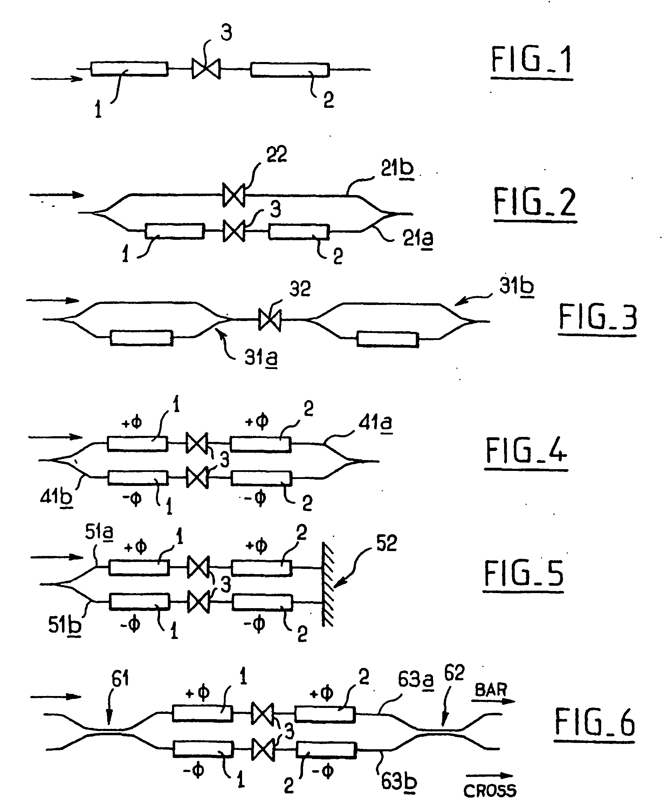

Le modulateur de phase indépendant de la polarisation illustré sur la figure 1 comporte deux modulateurs de phase identiques 1 et 2 entre lesquels est disposé un convertisseur TE ⇔ TM référencé par 3.

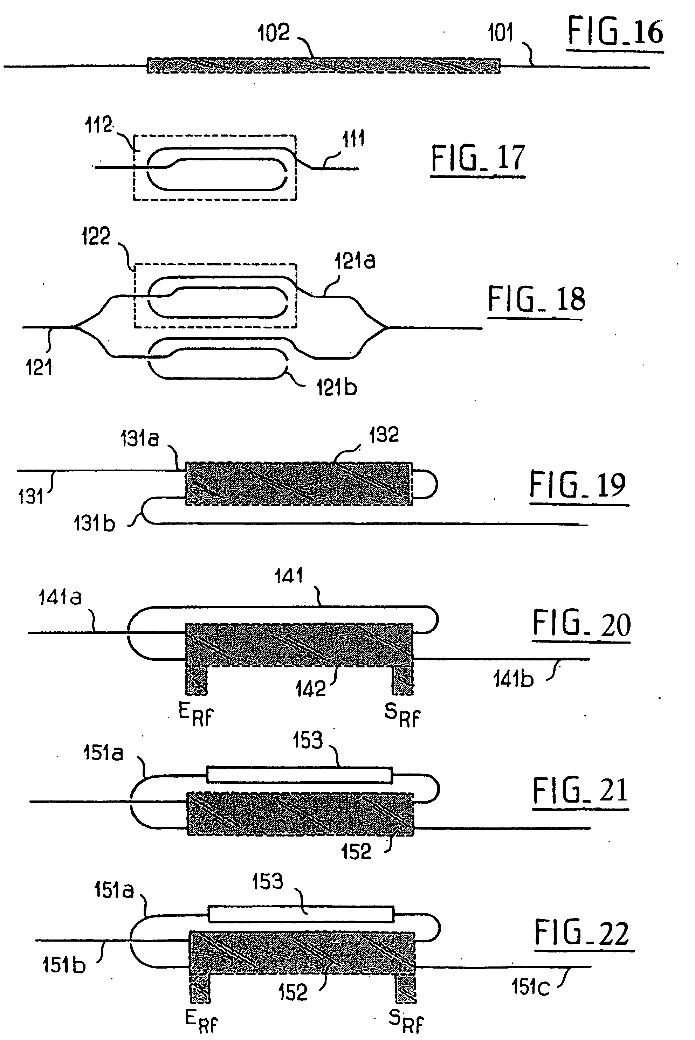

Les modulateurs 1 et 2 sont des modulateurs électro-optiques du type de ceux qui sont décrits plus loin de façon détaillée en référence aux figures 16 et suivantes.

Le convertisseur TE ⇔ TM est un convertisseur type de celui décrit dans la publication :

- (M. C. Oh et al., Appl. Phys. Lett 67 (13) (1995) pp 1821-1823).

Par exemple, dans le cas de modulateurs 1 et 2 à électrodes planes, la composante TM est d'abord modulée via le coefficient r33 dans le premier modulateur, puis est convertie en polarisation TE par le convertisseur, puis est modulée via le coefficient r13 dans le deuxième modulateur. La composante TE incidente est modulée via le coefficient r13 dans le premier modulateur, puis est convertie en polarisation TM par le convertisseur, puis est modulée via le coefficient r33 dans le deuxième modulateur. Si les deux modulateurs sont de même longueur, l'effet de la modulation sera le même sur les deux polarisations.

Les figures 2 à 6 illustrent d'autres composants optiques insensibles à la polarisation.

Le dispositif illustré sur la figure 2 est un modulateur d'intensité de type Mach-Zehnder indépendant de la polarisation.

L'une de ses deux branches, référencée par 21a, comporte un montage du type de celui illustré sur la figure 1.

L'autre de ses deux branches, référencée par 21b, comporte un convertisseur TE ⇔ TM, référencé par 22.

La figure 3 illustre un autre mode de réalisation possible pour un modulateur d'intensité insensible à la polarisation.

Ce modulateur comporte deux modulateurs 31a, 31b d'intensité de type Mach-Zehnder classiques qui sont montés en série et entre lesquels est disposé un convertisseur TE ⇔ TM, référencé par 32.

En variante encore, ainsi qu'illustré sur la figure 4, on peut utiliser sur chacune des deux branches 41a, 41b d'un montage Mach-Zehnder, des modulateurs de phase du type de celui illustré sur la figure 1. Les modulateurs élémentaires réalisent des modulations de phase de signes opposés.

On dispose ainsi d'un montage "push-pull" (selon la terminologie anglo-saxonne généralement utilisée par l'Homme du Métier) indépendant de la polarisation.

Egalement, ainsi qu'illustré sur la figure 5, le modulateur de la figure 1 peut être utilisé sur chacune des deux branches 51a, 51b d'un modulateur d'intensité à miroir (1/2 Mach-Zehnder dont chaque branche 51a, 51b se termine par un miroir 52), pour réaliser un montage "push-pull" indépendant de la polarisation.

En variante encore, ainsi qu'illustré sur la figure 6, le dispositif de la figure 1 peut être utilisé pour réaliser des coupleurs directifs indépendants de la polarisation.

Sur la figure 6, un montage Mach-Zehnder "push-pull" du type de celui illustré sur la figure 4 est disposé entre deux coupleurs directifs 61, 62, les deux branches 63a, 63b dudit montage prolongeant les branches de sortie du coupleur d'entrée 61 et se prolongeant par les branches d'entrée du coupleur de sortie 62. Plus précisément, les coupleurs directifs 3 dB sont du type comportant deux guides d'onde qui sont juxtaposés et s'étendent parallèlement sur une partie de leur longueur.

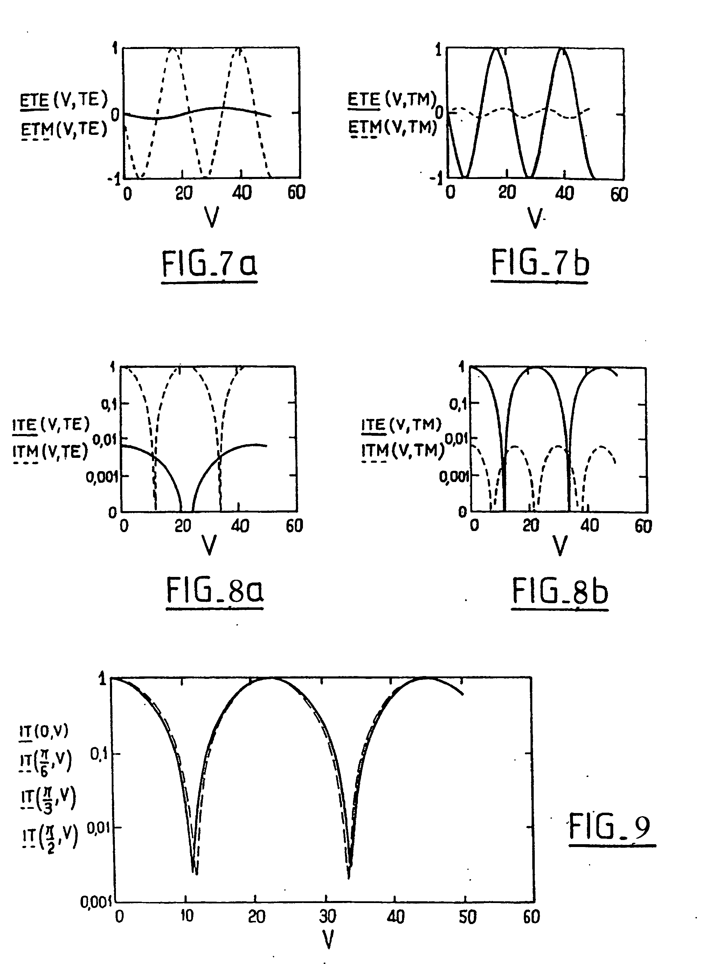

Les figures 7 à 15 illustrent les caractéristiques de polarisation des différents composants qui viennent d'être décrits.

Ces différentes courbes ont été obtenues en faisant l'hypothèse qu'un convertisseur TE ⇔ TM module les modes TE et TM sur une distance égale à la longueur de couplage, c'est-à-dire comme un convertisseur imparfait, dont on peut prévoir les effets des imperfections sur la performance en sortie du composant.

On définit un angle $\varphi_0$ relié au contraste (exprimé en dB) par :

$$\text{contraste} = -20*\log(\tan(\varphi_0))$$

Dans le cas d'un modulateur de phase insensible à la polarisation, l'amplitude des composantes TE et TM s'exprime en fonction des déphasages des modulateurs 1 et 2 (repérés par les indices 1 et 2), de $\varphi_0$, et des amplitudes des ondes avant modulation :

$$\begin{pmatrix} E_{TE} \\ E_{TM} \end{pmatrix} = -i \begin{pmatrix} \sin(\varphi_0)e^{i(\varphi TE,1+\varphi TE,2)} & \cos(\varphi_0)e^{i(\varphi TE,2+\varphi TM,1)} \\ \sin(\varphi_0)e^{i(\varphi TE,1+\varphi TM,2)} & -\sin(\varphi_0)e^{i(\varphi TM,1+\varphi TM,2)} \end{pmatrix} \begin{pmatrix} E_{TE,0} \\ E_{TM,0} \end{pmatrix}$$

Dans le cas idéal où les déphasages induits par les modulateurs 1 et 2 sont identiques, et où $\varphi_0=0$ (contraste infini), on obtient une modulation de phase indépendante de la polarisation (à laquelle s'ajoute une conversion de polarisation) :

$$\begin{pmatrix} E_{TE} \\ E_{TM} \end{pmatrix} = -i \begin{pmatrix} 0 & e^{i(\varphi TE,2+\varphi TM,1)} \\ e^{i(\varphi TE,1+\varphi TM,2)} & 0 \end{pmatrix} \begin{pmatrix} E_{TE,0} \\ E_{TM,0} \end{pmatrix}$$

Dans le cas d'un convertisseur imparfait, les termes principaux sont modulés avec la même phase, mais il reste des modulations résiduelles sur la deuxième composante de la polarisation. C'est ce qu'illustrent les figures 8a, 8b, sur lesquelles on a porté les amplitudes des modes en fonction de tension de modulation appliquée aux modulateurs 1 et 2.

Le cas d'un modulateur de Mach-Zehnder insensible à la polarisation, comportant un convertisseur TE ⇔ TM imparfait (contraste de 22 dB), est illustré sur les figures 8a, 8b où on représente les intensités de chaque mode en sortie pour un mode TE ou TM en entrée. La tension d'extinction est plus faible que la tension d'extinction de chaque modulateur pris séparément, car les phases des deux modulateurs de phase s'ajoutent. On remarque que la composante résiduelle ("cross-talk"), due à l'imperfection du convertisseur, est négligeable devant la composante principale du signal.

Sur la figure 9, on a représenté en fonction de la tension de modulation l'intensité totale en sortie pour différents angles de polarisation d'entrée (supposée linéaire pour simplifier).

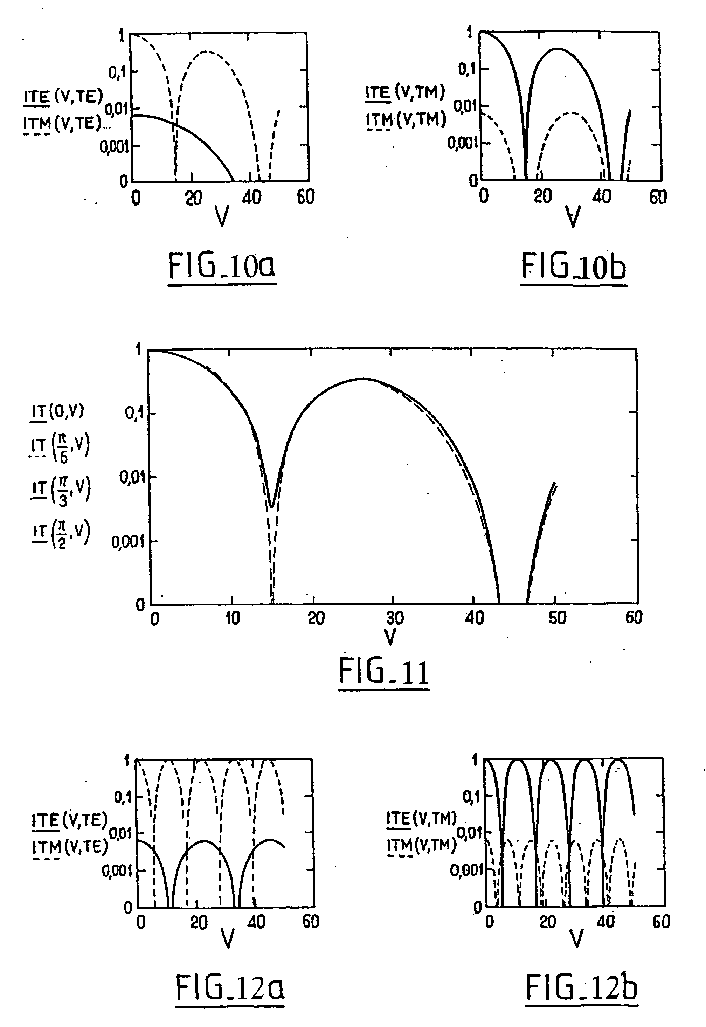

Le cas de deux modulateurs de Mach-Zehnder en série avec un convertisseur de polarisation (montage de la figure 3) est illustré figures 10a, 10b et 11. Comme on le constatera sur ces figures, ce montage permet l'indépendance en polarisation, mais ce cas est plus défavorable que le cas précédent : en effet, la tension d'extinction est égale à la plus petite des tensions d'extinction, car, dans ce cas, on effectue le produit des modulations d'intensité de chaque modulateur.

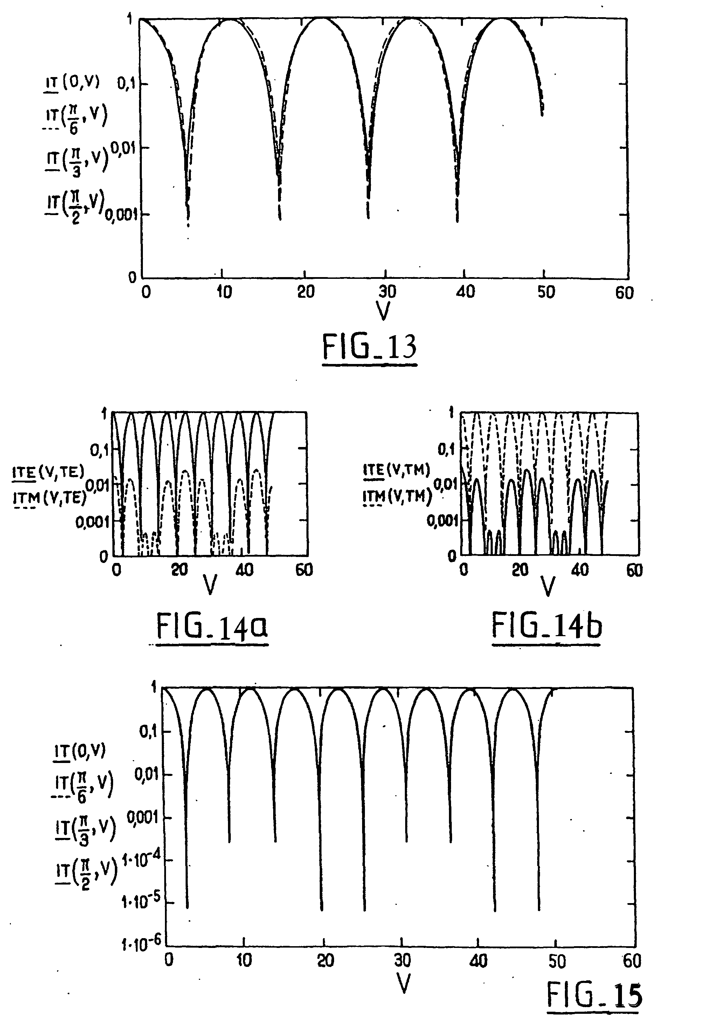

L'effet "push-pull" indépendant de la polarisation est illustré sur les figures 12a, 12b et 13 pour un modulateur de Mach-Zehnder comportant des modulateurs de phase en série avec un convertisseur de polarisation (montage de la figure 4). On obtient l'indépendance en polarisation, et une réduction d'un facteur 2 de la tension d'extinction, par rapport à un modulateur de Mach-Zehnder du type de la figure 2.

Des modulateurs type miroir sont susceptibles d'applications à grande échelle dans un réseau FTTH. L'insertion d'un convertisseur de polarisation dans les bras du modulateur (figure 5) permet de le rendre insensible à la polarisation. Cela est illustré sur les figures 14a, 14b et 15, lorsque les bras contiennent deux modulateurs de phase en série avec un convertisseur TE ⇔ TM. Il faut noter que dans ce cas l'onde optique traverse deux fois le convertisseur et la polarisation en sortie est donc identique à la polarisation d'entrée. L'effet push pull illustré ici permet d'abaisser la tension d'extinction.

On va maintenant décrire en référence aux figures 16 et suivantes des structures de commutateurs et modulateurs avantageuses.

La figure 16 illustre un exemple de modulateur capacitif conforme à l'art antérieur. Il comporte un guide optique 101 qui s'étend linéairement et qui est en un matériau électrooptique, ainsi qu'une électrode 102 qui s'étend sur une partie de la longueur de ce guide optique 101. Cette électrode 102 permet, avec une métallisation reliée à la masse disposée de l'autre côté du guide optique 1, de générer dans ledit guide optique 101 un champ électrique pour la modification de son indice de réfraction.

On sait qu'un modulateur électrooptique est caractérisé par le produit $V_\pi L$, où L est le chemin optique parcouru par la lumière, et $V_\pi$ est la tension demi-onde du modulateur, c'est à dire la tension nécessaire pour appliquer un déphasage de $\pi$ à l'onde lumineuse.

Dans le cas de polymères électrooptiques,

$$V_\pi L = \frac{\lambda \cdot d}{n^3 \cdot r_{eff}} \ ,$$

où $\lambda$ est la longueur de fonctionnement, d la distance inter-électrode, n l'indice de réfraction du matériau formant coeur, $r_{eff}$ le coefficient électrooptique effectif.

Pour $\lambda = 1,3 \ \mu m$, $d = 5 \ \mu m$, $n = 1,6$, et $r_{eff} = 10 \ pm/V$, on obtient $V_\pi L = 0,16 \ Vm$, soit, pour une tension de fonctionnement de 10 V, un chemin optique de 1,6 cm.

Ainsi, dans le cas d'un modulateur conforme à l'art antérieur illustré sur la figure 16, la longueur du modulateur doit être au moins supérieure à 1,6 cm, pour une largeur d'électrode de 10 $\mu m$.

On a représenté sur la figure 17 un modulateur de phase conforme à un mode de réalisation possible pour l'invention.

Le guide optique 111 de ce modulateur est replié deux fois sur lui-même et présente une forme en boucle allongée. Les différentes portions dudit modulateur qui s'étendent de façon juxtaposées au niveau de ladite boucle sont chevauchées par une couche de métallisation 12 qui constitue une électrode de commande du modulateur.

Le guide est conçu de manière à tolérer des courbures importantes, par exemple en choisissant pour le coeur et la gaine des matériaux ayant une différence d'indice de réfraction importante comme ceux décrits dans la publication :

- J. Liang, R. Levenson, J. Zyss, ACS/OSA 93 (Toronto) - Topical Meeting - organic Thin Films for Photonic Applications, "Design and fabrication of electro-optic polymer waveguides".

De tels matériaux permettent en effet des rayons de courbure importants.

En particulier, ils permettent de réaliser des guides optiques repliés.

Comme on l'aura compris, une configuration de modulateur du type de celle illustrée sur la figure 17 permet, pour une valeur de $V_\pi$ donnée, de diminuer considérablement la longueur du modulateur.

Notamment, pour diminuer la longueur d'un composant d'un facteur entier N, il suffit de réaliser (N-1)/2 boucles.

Ainsi, dans l'exemple qui vient d'être décrit, le modulateur s'étend sur 0,5 cm, pour une longueur optique totale de 1,6 cm,

La largeur de l'électrode 112 est de 200 $\mu m$.

Egalement, une telle configuration à guide optique replié peut être utilisée pour diminuer la valeur de $V_\pi$ pour une taille de composant fixée.

Ainsi, si pour une même taille de modulateur on veut réduire la tension $V_\pi$ d'un rapport N, il suffit de réaliser un composant du type de celui de la figure 17, avec (N-1)/2 boucles.

D'autres modes de réalisation de l'invention sont bien entendu possibles.

On a par exemple illustré sur la figure 18 un modulateur d'intensité de type Mach-zehnder dont les deux branches 121a et 121b de guides optiques sont en boucle, une électrode 22 étant superposée à la partie en boucle de la branche 121a.

Sur la figure 19, on a représenté une autre configuration de modulateur de phase.

Le guide optique 131 y est replié en épingle à cheveux.

Une électrode 132 est superposée à deux portions 131a et 131b juxtaposées de ce guide optique 31.

Les modulateurs qui viennent d'être décrits en référence aux figures 17 à 19 sont des modulateurs capacitifs utilisés pour des fréquences de commandes basses (inférieures à quelques GHz).

La bande passante en fréquence de commande de tels modulateurs capacitifs est donnée par leur constante RC, où R est leur résistance et C leur capacitance.

Pour un modulateur en boucle, il faut ajouter pour déterminer cette bande passante la limitation due au retard optique dans la boucle : pour une boucle de longueur 1 mm, la fréquence de coupure parasite est de l'ordre de 100 GHz. L'effet de la boucle est donc négligeable.

Sur la figure 20, on a représenté un modulateur à ondes progressives conforme à l'invention.

Le guide optique 141 de ce modulateur est en boucle. Une couche de métallisation 142 est superposée linéairement à deux portions parallèles 141a et 141b de ce guide optique 141. Ces portions 141a et 141b sont telles que le signal optique s'y propage dans le même sens.

La métallisation 142 est utilisée comme ligne de transmission d'un signal radio-électrique hyperfréquence entre une entrée $E_{Rf}$ et une sortie $S_{Rf}$, l'entrée $E_{Rf}$ étant reliée à une source hyperfréquence.

Le signal optique se propage dans le même sens dans les deux portions 141a et 141b. Le sens de propagation du signal radio-électrique est le même que celui des ondes optiques, de façon à permettre l'accord de phase entre les ondes optiques et hyperfréquence.

Le modulateur ainsi constitué est un modulateur à ondes progressives.

L'efficacité de modulation est proportionnelle au terme :

$$r_{boucle} = \cos \frac{\omega . \tau_{boucle}}{2} \sin c \frac{\omega . \tau_{électrode}}{2}$$

où $\omega$ est égal à $2\pi\nu$, $\nu$ étant la fréquence commune des ondes électriques et optiques,

et où $\tau_{boucle}$ et $\tau_{électrode}$ désignent respectivement les retards optiques dus à la boucle et à l'électrode,

En l'occurrence, $\tau_{boucle}$ est supérieur à $\tau_{électrode}$.

Pour un modulateur linéaire équivalent (ligne de transmission deux fois plus longue), le coefficient correspondant serait :

$$r_{linéaire} = \sin c \, (\omega\tau_{électrode})$$

Le rapport de ces coefficients est donc :

$$\frac{r_{boucle}}{r_{linéaire}} = \frac{\cos \dfrac{\omega\tau_{boucle}}{2}}{\cos \dfrac{\omega\tau_{électrode}}{2}}$$

Par conséquent, la bande passante d'un modulateur à ondes progressives en boucle est réduite par rapport à celle d'un modulateur linéaire, et est déterminée par la longueur de la boucle.

Néanmoins, l'intérêt d'un modulateur à ondes progressives en boucle tient en ce que la ligne hyperfréquence est plus courte que pour un modulateur linéaire, et qu'il y a par conséquent moins de puissance dissipée dans le modulateur.

On se réfère maintenant aux figures 21 et 22 sur lesquelles on a représenté des modulateurs en boucle respectivement de type capacitif et à ondes progressives, indépendants de la polarisation.

Le guide optique 151 des modulateurs présente une portion intermédiaire 151a qui, sur ledit guide optique 151, est interposée entre deux portions linéaires 151b et 151c de même longueur recouvertes par une même métallisation 152, ladite portion intermédiaire 151a n'étant elle-même pas recouverte par cette métallisation 152.

Cette portion intermédiaire 151a présente un convertisseur TE $\Leftrightarrow$ TM passif 153 par exemple du type de celui décrit dans l'article déjà cité précédemment.

Avec un tel montage, une première polarisation du signal optique est modulée lors du passage de celui-ci dans la branche d'entrée 151b du modulateur.

Puis, la polarisation est inversée par le convertisseur passif 153 lors du passage dans la branche intermédiaire 151a et la deuxième polarisation est modulée lors du deuxième passage sous la boucle, c'est-à-dire lors du passage du signal optique dans la branche de sortie 151c du modulateur.

Un tel modulateur a donc l'avantage de permettre de moduler les deux polarisations avec une seule électrode.

Par conséquent, il n'est pas nécessaire de prévoir des électrodes transverses, de sorte que la fabrication est considérablement simplifiée.

**Revendications**

1. Composant optique comportant un guide optique (111, 121, 131, 141, 151) dont le coeur est en un matériau électrooptique, ainsi qu'au moins une métallisation (112, 122, 132, 142, 152) au droit d'une portion dudit guide, pour la commande de celui-ci, **caractérisé en ce que** le guide optique (111, 121, 131, 141, 151) est replié sur lui-même et **en ce que** la métallisation (112, 122, 132, 142, 152) s'étend au droit d'au moins deux portions du guide optique qui s'étendent de façon repliée l'une par rapport à l'autre.

2. Composant selon la revendication 1, **caractérisé en ce que** le matériau électrooptique est un matériau polymère.

3. Composant capacitif selon l'une des revendications 1 ou 2, **caractérisé en ce que** la métallisation (112, 122, 132, 152) est une électrode de commande dudit composant.

4. Composant à ondes progressives selon l'une des revendications 1 ou 2, **caractérisé en ce que** la métallisation (142, 152) est une ligne de transmission hyperfréquence et **en ce que** le signal optique se propage dans les portions (141a, 141b ;151b, 151c) de guide au droit desquelles ladite métallisation (142, 152) s'étend, dans la même direction et le même sens que le signal hyperfréquence qui se propage dans cette métallisation.

5. Composant selon l'une des revendications 1 à 4, **caractérisé en ce que** le guide optique (151) comporte un convertisseur de polarisation (153) entre deux portions (151b, 151c) au droit desquelles s'étend la métallisation de commande (152).

6. Composant de modulation selon l'une des revendications 1 à 4.

7. Composant de commutation selon l'une des revendications 1 à 4.


**Claims**

1. An optical component including a light guide (111, 121, 131, 141, 151) whose core is made of an electro-optical material, together with at least one area of metallization (112, 122, 132, 142, 152) over a portion of said light guide, for the purpose of controlling it, the component being **characterized in that** said light guide (111, 121, 131, 141, 151) is folded on itself and **in that** the metallization (112, 122, 132, 142, 152) extends over at least two portions of the light guide extended in folded manner relative to each other.

2. A component according to claim 1, **characterized in that** the electro-optical material is a polymer material.

3. A capacitive component according to claim 1 or 2, **characterized in that** the metallization (112, 122, 132, 152) is a control electrode for said component.

4. A travelling wave component according to claim 1 or 2, **characterized in that** the metallization (142, 152) is a microwave transmission line, and **in that** the optical signal propagates in the portions (141a, 141b; 151b, 151c) of the light guide over which said metallization (142, 152) extends along the same axis and in the same direction as the microwave signal which propagates in said metallization.

5. A component according to any one of claims 1 to 4, **characterized in that** the light guide (151) includes a polarization converter (153) between two portions (151b, 151c) over which the control metallization (152) extends.

6. A modulation component according to any one of claims 1 to 4.

7. A switching component according to any one of claims 1 to 4.


**Patentansprüche**

1. Optisches Bauelement, das einen optischen Leiter (111, 121, 131, 141, 151) mit einem Kern aus einem elektrooptischen Material sowie wenigstens eine Metallisierung (112, 122, 132, 142, 152) auf der Außenseite eines Abschnitts des Leiters zu dessen Steuerung umfaßt, **dadurch gekennzeichnet, daß** der optische Leiter (111, 121, 131, 141, 151) auf sich selbst zurückgebogen ist und dadurch, daß die Metallisierung (112, 122, 132, 142, 152) sich auf der Außenseite wenigstens zweier Abschnitte des optischen Leiters erstreckt, die gegeneinander umgebogen verlaufen.

2. Bauelement nach Anspruch 1, **dadurch gekennzeichnet, daß** das elektrooptische Material ein Polymer-Material ist.

3. Kapazitives Bauelement nach einem der Ansprüche 1 oder 2, **dadurch gekennzeichnet, daß** die Metallisierung (112, 122, 132, 152) eine Steuerelektrode des Bauelements ist.

4. Bauelement für fortschreitende Wellen nach einem der Ansprüche 1 oder 2, **dadurch gekennzeichnet, daß** die Metallisierung (142, 152) eine Ultrahochfrequenz-Übertragungsleitung ist und dadurch, daß das optische Signal sich in den Abschnitten (141 a, 141 b; 151 b, 151 c) des Leiters, auf deren Außenseite sich die Metallisierung (142, 152) erstreckt, in derselben Richtung und im selben Sinn ausbreitet, wie das Ultrahochfrequenzsignal, das sich in dieser Metallisierung ausbreitet.

5. Bauelement nach einem der Ansprüche 1 bis 4, **dadurch gekennzeichnet, daß** der optische Leiter (151) zwischen zwei Abschnitten (151b, 151c), auf deren Außenseite sich die Steuerungsmetallisierung (152) erstreckt, einen Polarisationswand!er (153) umfaßt.

6. Modulations-Bauelement nach einem der Ansprüche 1 bis 4.

7. Schalt-Bauelement nach einem der Ansprüche 1 bis 4.

FIG_1

FIG_2

FIG_3

FIG_4

FIG_5

FIG_6

FIG.7a

FIG.7b

FIG.8a

FIG.8b

FIG.9

FIG. 10a

FIG. 10b

FIG. 11

FIG. 12a

FIG. 12b

$\underline{IT}(0,V)$
$\underline{IT}(\frac{\pi}{6},V)$
$\underline{IT}(\frac{\pi}{3},V)$
$\underline{IT}(\frac{\pi}{2},V)$

FIG_13

$\underline{ITE}(V,TE)$
$\underline{ITM}(V,TE)$

FIG_14a

$\underline{ITE}(V,TM)$
$\underline{ITM}(V,TM)$

FIG_14b

$\underline{IT}(0,V)$
$\underline{IT}(\frac{\pi}{6},V)$
$\underline{IT}(\frac{\pi}{3},V)$
$\underline{IT}(\frac{\pi}{2},V)$

FIG_15

12

FIG. 16

102   101

FIG. 17

112   111

FIG. 18

122   121a   121   121b

FIG. 19

131a   132   131   131b

FIG. 20

141a   141   142   141b   $E_{RF}$   $S_{RF}$

FIG. 21

151a   153   152

FIG. 22

151a   153   151b   152   151c   $E_{RF}$   $S_{RF}$